# EUROPEAN PATENT SPECIFICATION

(11) **EP 1 820 638 B1**
(45) Date of publication and mention of the grant of the patent: **03.07.2013**
(21) Application number: 05811306.9
(22) Date of filing: 29.11.2005
(51) Int. Cl.: C09D 5/08, B32B 15/08

(54) **CHROMATE-FREE RESIN COMPOSITE DAMPING MATERIAL WITH EXCELLENT DURABLE ADHESION**
DÄMPFUNGSMATERIAL AUS EINEM CHROMATFREIEN HARZKOMPOSIT MIT HERVORRAGENDER DAUERHAFTER ADHÄSION
MATERIAU AMORTISSEUR COMPOSITE DE RESINE DEPOURVU DE CHROMATE, OFFRANT UNE EXCELLENTE ADHERENCE DE LONGUE DUREE

(30) Priority: 03.12.2004 JP 2004351152; 04.08.2005 JP 2005226971
(43) Date of publication of application: 22.08.2007
(73) Proprietor: Nippon Steel & Sumitomo Metal Corporation, Tokyo 100-8071 (JP); Nippon Steel & Sumikin Stainless Steel Corporation, Tokyo 103-0021 (JP)
(72) Inventor: KADOWAKI, Nobuo NIPPON STEEL CORP. NAGOYA WORKS, Aichi 4768686 (JP)
(74) Representative: Vossius & Partner
(86) International application number: PCT/JP2005/022263
(87) International publication number: WO 2006/059761

(56) References cited:
- EP-A2- 0 472 185
- JP-A- 01 198 622
- JP-A- 11 277 671
- JP-A- 2001 089 868
- JP-A- 2003 166 079
- JP-A- 2003 327 486
- JP-A- 2004 043 886

## Description

### [Technical Field]

The present invention relates to a composite type vibration deadening material, more particularly, relates to a composite type vibration deadening material exhibiting a high vibration deadening performance and excellent bonding strength and excellent also in workability and heat resistance, used as structural members of industrial machines, transportation machines, home appliances, acoustic equipment, electronic equipment, information equipment, buildings, and other various structures or part thereof.

### [Background Art]

In recent years, particularly in many industrial fields such as manufacturing and transportation, improvement of the work environment on the production floors has been demanded. As part of this, the standard of noise and vibration are becoming more severe. Further, in general homes as well, noise in the living environment is troublesome for the neighbors, therefore a higher silence is also being demand for home electric appliances and machinery products.

Particularly, in equipment constituted by metal materials, vibration is easily transmitted. Metal panels have become a source of noise in many cases. Therefore, countermeasures for preventing vibration and preventing noise are strongly demanded.

Conventionally, as one of the vibration deadening materials used for preventing noise and vibration, a composite type vibration deadening material having a multilayer structure comprised of metal layers sandwiching an intermediate layer made of a viscoelastic resin composition has been proposed.

Such a composite type vibration deadening material has the function of converting vibration energy to heat energy by slip deformation of the intermediate viscoelastic resin layer generated along with bending vibration of the composite type vibration deadening material, attenuating the vibration rate and vibration amplitude, and reducing sound propagation. Such a composite type vibration deadening material exhibits its best vibration deadening performance by direct contact with a vibration source or use as a cover or other part of a vibration source body.

Due to this, such a composite type vibration deadening material is actually used for purposes of automobile oil pans, engine head covers, engine room shield plates, dash panels, floor panels, gear covers, chain covers, muffler covers, mufflers, floor housings, and other parts of automobiles, motorcycles, farm machinery, etc., motor covers, compressor covers, evaporator covers, and other parts of freezing temperature adjustment equipment, computer cases, hard disk drive cases, speaker frames, and other parts of acoustic electronic equipment, chain saw covers, generator covers, lawn mower covers, and other parts of outdoor equipment, steps, doors, flooring, roofing, and other construction materials, and other applications.

Further, use of such composite type vibration deadening materials is also being studied for many other products for which a vibration deadening property is demanded.

On the other hand in metal materials used in the fields of home electric products and automobiles, chromate treatment, which is cheap and has excellent corrosion performance, is widely used as a temporary rust prevention and paint undercoat, but in recent years, from the viewpoint of protection of the global environment, use of environmental load substances (lead, hexavalent chromium, cadmium, mercury, etc.) is being strictly regulated.

For the purpose of raising the bondability between the metal sheet and the intermediate viscoelastic resin layer in a composite type vibration deadening material, chromate treatment is carried out as the undercoat treatment of the metal sheet bonding surface. Therefore, development of a composite type vibration deadening material without using chromate has been demanded.

Conventionally, in the field of surface-treated steel sheet, various studies have been made for techniques to replace chromate. For example, Japanese Unexamined Patent Publication (Kokai) No. 04-48081 discloses a method of treatment by a transition metal (VIA group)-based aqueous ammonium molybdate solution for which the same passivation function as that by chromic acid is expected.

Further, Japanese Unexamined Patent Publication (Kokai) No. 2003-55777 discloses a chromate-free treated hot dip zinc-aluminum alloy plated steel sheet having a coat containing a zirconium compound and a vanadic compound. Further, Japanese Unexamined Patent Publication (Kokai) No. 2001-89868 discloses an example of a non-chromate chemical treatment containing a tannic acid, a silane coupling agent, and silica particles.

As the viscoelastic resin or the viscoelastic resin composition used in the intermediate layer of the composite type vibration deadening material, many viscoelastic resins or viscoelastic resin compositions are known.

For example, a polyester resin (refer to Japanese Unexamined Patent Publication (Kokai) No. 50-143880) or a resin composition comprised of a polyester resin plus a plasticizer (refer to Japanese Unexamined Patent Publication (Kokai) No. 52-93770), resin compositions obtained by combining a plurality of polyester resins (refer to Japanese Unexamined Patent Publication (Kokai) No. 62-295949 and Japanese Unexamined Patent Publication (Kokai) No. 63-202446), a polyurethane resin foam (refer to Japanese Unexamined Patent Publication (Kokai) No. 51-91981), a polyamide resin (refer to Japanese Unexamined Patent Publication (Kokai) No. 56-159160), an ethylenevinyl acetate copolymer (refer to Japanese Unexamined Patent Publication (Kokai) No. 57-34949), an isocyanate prepolymer and vinyl monomer copolymer (refer to Japanese Unexamined Patent Publication (Kokai) No. 55-27975), a polyvinyl acetal resin (refer to Japanese Unexamined Patent Publication (Kokai) No. 60-88149), etc. are known.

Further, for the purpose of maintaining the high vibration deadening performance and bonding strength, the present inventors developed a viscoelastic resin composition using a cross-linking agent and made of a mixture of a plurality of viscoelastic resins.

If giving concrete examples, for example, as the technique of using a cross-linking agent, there are a viscoelastic resin composition containing a specific amorphous block copolymerizable polyester resin made of a high glass transition temperature segment and a low glass transition temperature segment such as a lactone component (refer to Japanese Unexamined Patent Publication (Kokai) No. 01-198622), a viscoelastic resin composition containing a polyester resin synthesized using a glycol having a dimer acid or a hydrogenated dimer acid and a side chain as a starting material (refer to Japanese Unexamined Patent Publication (Kokai) No. 06-329770), a viscoelastic resin composition containing a copolymerizable polyester resin having an aromatic ring in the side chain (refer to Japanese Unexamined Patent Publication (Kokai) No. 06-329771), a viscoelastic resin composition containing a copolymerizable polyester resin having a side chain having five or more carbon atoms (refer to Japanese Unexamined Patent Publication (Kokai) No. 07-179735), and so on.

By using these inventions as the intermediate viscoelastic resin composition of the composite type vibration deadening material, the vibration deadening property, the bonding strength, and a high heat resistance can be realized.

JP 11 277671 A discloses a vibration damping laminate comprising an intermediate layer of a thermosetting resin comprising an amorphous polyester and a cross linking agent such as an epoxy resin, an acid anhydride, an isocyanate compound or a melamine compound and two outer steel plates that may have been subjected to a chromate treatment.

### [Summary of The Invention]

Summarizing the problems to be solved by the invention, as described above, in the field of surface treated steel sheets, chromate-free treatment is spreading, but unfortunately a chromate-free bonding undercoat treatment giving a bondability equivalent to that by chromate treatment, particularly durable bondability, has not yet actually been found for a composite type vibration deadening material.

Particularly, the viscoelastic resin compositions disclosed in Japanese Unexamined Patent Publication (Kokai) No. 01-198622, Japanese Unexamined Patent Publication (Kokai) No. 06-329770, Japanese Unexamined Patent Publication (Kokai) No. 06-329771, and Japanese Unexamined Patent Publication (Kokai) No. 07-179735 developed by the present inventors are based on thermosetting polyester-based resins and create hydrogen bonds with the chromic acid hydrate of the chromate treatment applied to the surface of the metal sheet to manifest a high bonding strength.

The conventional chromate-free treatment, however, could not obtain a bonding strength as good as that of chromate treatment.

An object of the present invention is to provide a chromate-free type composite type vibration deadening material having an excellent bonding strength, particularly durable bondability, equivalent to that by a conventional chromate treated composite type vibration deadening material.

In order to achieve the above object, the present inventors intensively studied the optimum combination of the vibration deadening resin and the chromate-free undercoat agent and consequently found the fact that a particularly conspicuous durable bondability was obtained by a combination of a specific vibration deadening resin and chromate-free undercoat agent.

Namely, the present invention provides:
(1) A chromate-free resin-composite type vibration deadening material excellent in durable bondability having a multilayer structure comprised of a viscoelastic resin composition sandwiched between metal sheets as an intermediate layer, characterized by that:
   (i) the viscoelastic resin composition is a thermosetting resin comprised of an amorphous copolymerizable polyester resin having a weight average molecular weight from 5000 or monto 50000 or less and a curing agent and
   (ii) the surfaces of the metal sheets on the sides contacting the viscoelastic resin layer are provided with chromate-free bonding undercoats comprising 5 mass% to 50 mass% of silica, 5 mass% to 50 mass% of a polyester resin, 1 mass% to 50 mass% of tannic acid, and 0 mass% to 30 mass% of a silane coupling agent.
(2) A chromate-free resin-composite type vibration deadening material excellent in durable bondability as set forth in (1), wherein the curing agent is comprised of at least one type of curing agent selected from the group consisting of a polyepoxy compound, polyisocyanate compound, and acid anhydride.
(3) A chromate-free resin-composite type vibration deadening material excellent in durable bondability as set forth in (1) or (2), wherein the amount of deposition of the chromate-free bonding undercoat on the metal sheet surface is 3 to 900 mg/m².
(4) A chromate-free resin-composite type vibration deadening material excellent in durable bondability as set forth in any one of (1) to (3), wherein the metal sheet is a steel sheet, plated steel sheet, stainless steel sheet, aluminum sheet, or titanium sheet.

The resin-composite type vibration deadening material of the present invention does not contain hexavalent chromium in the undercoat treatment layers of the surfaces of the metal sheets on the sides contacting the viscoelastic resin layer, therefore is more excellent than the resin-composite type vibration deadening material using the conventional chromate-based undercoat treatment in view of the environmental load.

In addition, in the present invention, by combining a specific chromate-free bonding undercoat (comprising components of 5 mass% to 50 mass% of silica, 5 mass% to 50 mass% of polyester resin, 1 mass% to 50 mass% of tannic acid, and 0 mass% to 30 mass% of a silane coupling agent) and a specific viscoelastic resin composition (thermosetting viscoelastic resin composition made of an amorphous copolymerizable polyester resin and a curing agent), an initial bonding strength equivalent to that by a conventional resin-composite type vibration deadening material using a chromate-based bonding undercoat agent is obtained, therefore the shaping property is excellent.

Further, the result is equivalent to a conventional resin-composite type vibration deadening material using a chromate-based bonding undercoat agent in the durable bondability as well, so is extremely useful as a vibration and noise reduction material having a small environmental load.

### [The Most Preferred Embodiment]

### <Viscoelastic Resin Composition>

The amorphous copolymerizable polyester resin forming a component of the viscoelastic resin composition used in the present invention is an amorphous copolymerizable polyester resin containing polycarboxylic acid bonding units, polyol bonding units, and/or polyhydroxycarboxylic acid block bonding units.

In the present invention, "amorphous" means that, when the temperature rises up to -100°C to 300°C at a temperature elevation rate of 20°C/min in a nitrogen atmosphere and measured by a differential scan calorimeter (DSC), a clear crystal melting peak is not exhibited.

Due to the amorphous polyester resin, the vibration deadening performance is improved, and in addition a phenomenon such as a drop in the bonding strength along with aging due to the advance of the crystallization which is frequently observed in a crystalline polyester resin is not confirmed.

The polycarboxylic acid bonding units of the amorphous copolymerizable polyester resin used in the present invention are not particularly limited in type and amount so far as the copolymerizable polyester resin is amorphous, but preferably 40 mol% or more, particularly preferably 50 mol% or more, of the polycarboxylic acid bonding units are aromatic dicarboxylic acid units.

Further, the upper limit of the content of the aromatic dicarboxylic acid bonding units is not particularly determined and may be 100 mol% as well. When the content of the aromatic dicarboxylic acid bonding units is less than 40 mol%, the bonding strength and heat resistance of the viscoelastic resin composition sometimes become insufficient.

As the monomer forming the aromatic dicarboxylic acid bonding units of the amorphous copolymerizable polyester resin used in the present invention, there can be mentioned aromatic carboxylic acids such as terephthalic acid, isophthalic acid, orthophthalic acid, 1,5-naphthalene dicarboxylic acid, 2,6-naphthalene dicarboxylic acid, 4,4'-biphenyl carboxylic acid, 2,2'-biphenyl dicarboxylic acid, diphenyl methane dicarboxylic acid, phenyl indene dicarboxylic acid, 5-sodium sulfoisophthalic acid, and ester-forming derivatives of the same.

Among these aromatic dicarboxylic acids and ester-forming derivatives of the same, from the viewpoint of the vibration deadening property and ease of acquisition, preferably use is made of an aromatic dicarboxylic acid such as terephthalic acid and isophthalic acid. Further, these aromatic dicarboxylic acid and ester-forming derivatives of them same may be used solely or used in combination of two or more types together.

Further, as the monomer forming the polycarboxylic acid bonding units other than the aromatic dicarboxylic acid bonding units used in the present invention, there can be mentioned alicyclic dicarboxylic acids such as 1,4-cyclohexane dicarboxylic acid, 1,3-cyclohexane dicarboxylic acid, and 1,2-cyclohexane dicarboxylic acid, and ester forming derivatives of the same; alkenyl succinic acids such as succinic acid, glutaric acid, adipic acid, pimelic acid, suberic acid, azelic acid, sebacic acid, dodecane diacid, eicosane diacid, 2-methylsuccinic acid, 2-methyladipic acid, 3-methyladipic acid, 3-methylpentane dicarboxylic acid, 2-methyloctane dicarboxylic acid, 3,8-dimethyldecane dicarboxylic acid, 3,7-dimethyldecane dicarboxylic acid, 9,12-dimethyleicosane diacid, dimer acid, hydrogenated dimer acid, octenyl anhydride succinic acid, dodecenyl anhydride succinic acid, pentadecenyl anhydride succinic acid, and octadecenyl anhydride succinic acid; aliphatic dicarboxylic acids such as fumaric acid, maleic acid, itaconic acid, 8,12-eicosadiene dicarboxylic acid, and ester forming derivatives of the same.

These polycarboxylic acids and ester forming derivatives of the same may be used solely or used in combinations of two or more types together.

Further, among these polycarboxylic acids and ester-forming derivatives of the same, from the viewpoint of the vibration deadening performance and practical use, preferably use is made of adipic acid, azelic acid, sebacic acid, dimer acid, hydrogenated dimer acid, alkenyl succinic acid, etc., and sebacic acid, dimer acid, hydrogenated dimer acid, alkenyl succinic acid, etc. are further preferred.

Further, the polycarboxylic acid units formed using sebacic acid, dimer acid, hydrogenated dimer acid, and alkenyl succinic acid as the starting material are preferably contained in an amount of 2 mol% or more in the polycarboxylic acid bonding units used in the present invention from the viewpoint of the vibration deadening performance and the viewpoint of adjustment of a glass transition temperature of the resin and further preferably contained in 5 mol% or more.

Further, preferably the content of the polycarboxylic acid bonding units is 60 mol% or less, and further preferably 50 mol% or less.

When the content of the polycarboxylic acid bonding units is less than 2 mol%, the vibration deadening performance becomes insufficient, or it sometimes becomes difficult to adjust the glass transition temperature of the resin to a predetermined value.

Further, when the content of the polycarboxylic acid bonding units exceeds 60 mol%, the bonding strength sometimes becomes insufficient.

Further, as the monomer forming the polycarboxylic acid bonding units used in the present invention, use may be made of a trifunctional or higher polycarboxylic acid such as trimellitic acid and pyromellitic acid according to need within a range of a small amount not degrading the characteristics of the viscoelastic resin composition of the present invention.

Here, among the monomers forming the polycarboxylic acid bonding units used in the present invention, the content of the trifunctional or higher polycarboxylic acid is preferably 0.5 mol% or more, further preferably 1 mol% or more. Further, the content of these trifunctional or higher polycarboxylic acids is preferably 10 mol% or less, further preferably 5 mol% or less.

When the content of these trifunctional or higher polycarboxylic acids is less than 0.5 mol%, there is a case where the curability and vibration deadening performance become insufficient, and when the content of these trifunctional or higher polycarboxylic acids exceeds 10 mol%, gelation sometimes occurs at the time of the production of the amorphous copolymerizable polyester resin.

The polyol bonding units of the amorphous copolymerizable polyester resin used in the present invention is not particularly limited in type and amount so far as the copolymerizable polyester resin is amorphous, but preferably 30 mol% or more, particularly preferably 50 mol% or more, of the polyol bonding units are glycol bonding units having four or more carbon atoms having an alkyl group in the side chain.

Further, the upper limit of the content of the glycol bonding units is not particularly determined and may be 100 mol% as well. When the content of the glycol bonding units having four or more carbon atoms having the alkyl group in the side chain is less than 30 mol%, the vibration deadening performance sometimes becomes insufficient.

As the monomer forming the glycol bonding units having four or more carbon atoms having the alkyl group in the side chain in the amorphous copolymerizable polyester resin used in the present invention (also referred to as glycol having four or more carbon atoms having the alkyl group in the side chain used in the present invention), there can be mentioned 2-methylpropanediol, 1,3-butanediol, neopentylglycol, 3-methylpentanediol, trimethylpentanediol, 2-methyl-1,8-octanediol, 3,3-dimethylol pentane, 3,3'-dimethylolheptane, 8,13-methyleicosane diol, a reduction product of the dimer acid, neopentylglycol hydroxypivalate, etc.

Among these glycol bonding units each having four or more carbon atoms having the alkyl group in the side chain, from the viewpoint of the vibration deadening property and ease of acquisition, preferably use is made of 2-methylpropanediol, neopentylglycol, 3-methylpentanediol, and 3,3'-dimethylolheptane.

These glycols each having four or more carbon atoms having the alkyl group in the side chain may be used solely or used in combinations of two or more types together.

Further, as the monomer forming the polyol bonding units other than the glycol bonding units having four or more carbon atoms having the alkyl group in the side chain used in the present invention (also referred to as "the other polyol used in the present invention"), there can be mentioned aliphatic glycols such as ethyleneglycol, propyleneglycol, 1,4-butanediol, 1,5-pentanediol, 1,6-hexanediol, 1,8-octanediol, 1,9-nonanediol, 1,10-decanediol, eicosanediol, diethyleneglycol, triethyleneglycol, polyethyleneglycol, and polytetramethyleneglycol polycarbonate diol; an alicyclic glycol such as 1,4-cyclohexanedimethanol and tricyclodecanedimethanol; an aromatic diol such as an ethylene oxide additive such as bisphenol A or bisphenol S or propylene oxide additive.

These polyols may be used solely or used in combinations of two or more types.

Further, as the monomer forming the polyol bonding unit used in the present invention, use may be made of a trifunctional or higher polyol such as trimethylolpropane, glycerin, and pentaerythritol according to need within a range of a small amount not degrading the characteristics of the viscoelastic resin composition of the present invention.

Here, among the monomers forming the polyol bonding units used in the present invention, the content of the trifunctional or higher polyol is preferably 0.5 mol% or more, further preferably 1 mol% or more.

Note that the content of the trifunctional or higher polycarboxylic acid explained above is not limited so long as it is 0.5 mol% or more. Further, the content of these trifunctional or higher polyols is preferably 10 mol% or less, more further preferably 0.5 mol% or less.

When the content of these trifunctional or higher polyols is less than 0.5 mol%, the curability and the vibration deadening performance sometimes become insufficient. When the content of these trifunctional or higher polyols exceeds 10 mol%, gelation sometimes occurs at the time of production of the amorphous copolymerizable polyester resin.

There are many combinations of compositions of the amorphous copolymerizable polyester resin obtained from such polycarboxylic acid bonding units and polyol bonding units. These are appropriately selected according to the intended coagulation force of the resin, bonding strength, vibration deadening performance, etc.

For example, from the viewpoint of for example the vibration deadening performance, the preferred combination is one where 40 mol% or more of the polycarboxylic acid bonding units are aromatic dicarboxylic acid units, 30 mol% or more of the polyol bonding units are glycol bonding units having four or more carbon atoms having an alkyl group in the side chain, and the content of the trifunctional or higher polycarboxylic acid is 0.5 mol% or more.

And the most preferred combination is one where 50 mol% or more of the polycarboxylic acid bonding units are aromatic dicarboxylic acid units, 50 mol% or more of the polyol bonding units are glycol bonding units having four or more carbon atoms having the alkyl group in the side chain, and the content of the trifunctional or higher polycarboxylic acid is 1 mol% or more.

Further, as mentioned above, from the viewpoint of the adjustment of the glass transition temperature of the amorphous copolymerizable polyester resin obtained from the polycarboxylic acid bonding units and the polyol bonding units and the improvement of the bondability or the reactivity with the curing agent, it is possible to use a known method to add a ring-shaped ester group by open ring addition to the terminal end of the molecular chain for polymerization and add polyhydroxycarboxylic acid block bonding units.

The polyhydroxycarboxylic acid block bonding units of the amorphous copolymerizable polyester resin used in the present invention are not particularly limited in type and amount so far as the copolymerizable polyester resin is amorphous, but the polyhydroxycarboxylic acid must be block copolymerizable.

As the ring-shaped esters imparting the polyhydroxycarboxylic acid block bonding units, there can be mentioned β-propiolactone, β-2,2-dimethylpropiolactone, δ-valerolactone, δ-3-methylvalerolactone, ε-caprolactone, and enantolactone.

### <Method of Production of Amorphous Copolymerizable Polyester Resin>

The method of production of the amorphous copolymerizable polyester resin used in the present invention is not particularly limited. Use can be made of a known method of production.

For example, there can be mentioned a method of production of charging the polycarboxyliic acid and ol component in a vessel under a nitrogen atmosphere, performing an esterification and/or transesterification reaction under a constant temperature condition over a constant time, and then performing a polycondensation reaction under high vacuum under a constant temperature condition over a constant time.

Here, in the above method of production, the temperature condition of the esterification and/or transesterification reaction is preferably 140°C or more, more particularly preferably 160°C or more. Further, this temperature condition is preferably 260°C or less, particularly preferably 240°C or less.

When this temperature condition is less than 140°C, the reaction rate tends to be lowered, while when this temperature condition exceeds 260°C, decomposition of the product tends to become conspicuous.

Further, in the above method of production, the reaction time of the esterification and/or transesterification reaction is preferably 0.5 hour or more, particularly preferably 1 hour or more. Further, this reaction time is preferably 24 hours or less, particularly preferably 12 hours or less.

When this reaction time is less than 0.5 hour, the esterification and/or transesterification reaction tends not to proceed sufficiently, while a reaction time exceeding 24 hours is not preferred from the viewpoint of the economy.

Then, in the above method of production, the temperature condition of the polycondensation reaction is preferably 180°C or more, more preferably 200°C or more. Further, this temperature condition is preferably 300°C or less, particularly preferably 280°C or less.

When this temperature condition is less than 180°C, the polycondensation tends not to proceed at a sufficient speed, while when this temperature condition exceeds 300°C, the molecular weight of the amorphous copolymerizable polyester resin tends to be insufficient due to the decomposition of the product.

Further, in the above method of production, the reaction time of the polycondensation reaction is preferably 0.5 hour or more, particularly preferably 1 hour or more. Further, this reaction time is preferably 5 hours or less, particularly preferably 3 hours or less.

When this reaction time is less than 0.5 hour, the polycondensation of the amorphous copolymerizable polyester resin tends not to proceed until a sufficient amount of molecules are obtained, while when this reaction time exceeds 5 hours, the decomposition of the product tends to become conspicuous.

Further, in the above method of production, the pressure in vessel at the time of the polycondensation reaction is preferably 660 Pa or less, particularly preferably 130 Pa or less. When the pressure in the vessel exceeds 660 Pa, the polycondensation of the amorphous copolymerizable polyester resin tends not to proceed until a sufficient amount of molecules are obtained.

Further, in the above method of production, the polycondensation reaction can proceed even without a catalyst, but in general, preferably the polycondensation reaction is carried out by adding a catalyst.

The type of this catalyst is not particularly limited. Preferably use can be made of a known polymerization use catalyst for a amorphous copolymerizable polyester resin. As concrete examples, there can be mentioned calcium acetate, zinc acetate, dibutyl tin oxide, dibutyl lead dilaurate, germanium oxide, antimony trioxide, tetrabutyl titanate, etc. These catalysts may be used solely or used in combinations of two or more types.

Further, in the above method of production, the content of the catalyst in the polycondensation reaction solution is preferably 1 ppm or more, particularly preferably 30 ppm or more. Further, the content of this catalyst is preferably 5000 ppm or less, particularly preferably 2000 ppm or less.

When the content of this catalyst is less than 1 ppm, the reaction rate tends to be lowered, while when the content of this catalyst exceeds 5000 ppm, the decomposition and coloring of the product tend to become conspicuous.

### <Weight Average Molecular Weight of Amorphous Copolymerizable Polyester Resin>

The weight average molecular weight of the copolymerizable polyester resin used in the present invention measured by gel permeation chromatography (GPC) must be 5000 or more, preferably 8000 or more.

Further, this weight average molecular weight is 50000 or less, particularly preferably 40000 or less, from the viewpoint of workability in the production process of the viscoelastic resin composition.

When this weight average molecular weight is less than 5000, there is the problem that both of the vibration deadening performance and bonding strength of the viscoelastic resin composition are lowered. Further, from the viewpoints of the vibration deadening performance and bonding strength of the viscoelastic resin composition, this weight average molecular weight is preferably as high as possible and is preferably determined to the optimum value in practical use. However, when this weight average molecular weight exceeds 50000, the workability in the production process of the viscoelastic resin composition tends to be lowered, so this is not preferred.

### <Glass Transition Temperature of Amorphous Copolymerizable Polyester Resin>

The temperature at which the vibration deadening performance becomes the maximum is mainly determined according to the glass transition point temperature of the amorphous copolymerizable polyester resin, but in the selection of the amorphous copolymerizable polyester resin, a resin having the optimum glass transition point temperature may be appropriately selected so that the desired temperature peak of the vibration deadening property is obtained.

For example, when the composite type vibration deadening material using a viscoelastic resin composition comprising the amorphous copolymerizable polyester resin of the present invention as a component is used near ordinary temperature, the glass transition point temperature of the amorphous copolymerizable polyester resin is preferably -60°C or more, more preferably -40°C or more. Further, this glass transition temperature is preferably 0°C or less, more preferably -10°C or less.

When this glass transition temperature is less than - 60°C and exceeds 0°C, according to the type and amount of the curing agent, the vibration deadening performance is sometimes not exhibited near ordinary temperature.

Here, the glass transition temperature of the amorphous copolymerizable polyester resin can be measured by a known method by using a differential scan calorimeter (DSC) or the like.

### <Curing Agent>

The viscoelastic resin composition used in the present invention includes a curing agent able to form cross-links by reaction with the amorphous copolymerizable polyester resin as an indispensable component.

Here, the curing agent used in the present invention is not particularly limited. Compounds able to form cross-links by reaction with the amorphous copolymerizable polyester resin used in the present invention can be preferably used, but for example preferably use is made of one or more types of curing agents selected from the group consisting of polyepoxy compounds, polyisocyanate compounds, and acid anhydrides.

Namely, as the curing agent used in the present invention, a polyepoxy compound, polyisocyanate compound, or acid anhydride may be used alone or may be used in a mixture in a combination of a polyisocyanate compound and polyepoxy compound, a polyepoxy compound and an acid anhydride, or a polyepoxy compound, an acid anhydride, and a polyisocyanate compound.

By thermosetting after incorporating the curing agent used in the present invention into the amorphous copolymerizable polyester resin used in the present invention to form cross-links, the bondability of the viscoelastic resin composition of the present invention is improved, therefore the moldability and workability of the composite type vibration deadening material of the present invention are improved and the heat resistance after shaping and processing is improved.

In the same way, the hydrolysis resistance of the viscoelastic resin composition of the present invention is improved, so it can be considered that also the durability of the composite type vibration deadening material of the present invention is enhanced.

### <Polyepoxy Compounds>

Here, the polyepoxy compound used in the present invention is not particularly limited, but preferably use can be made of polyepoxy compounds such as epibis type epoxy resins, aliphatic epoxy resins, alicyclic epoxy resins, glycidyl ether-based resins, glycidyl ester-based resins, glycidyl amine-based resins, novolac type epoxy resins, and heterocyclic epoxy resins.

Further, among these polyepoxy compounds, from the viewpoint of the curability, particularly preferably use is made of a polyepoxy compound having two or more glycidyl groups in one molecule.

Further, as concrete examples of the polyepoxy compounds used in the present invention, there can be mentioned bisphenol A diglycidyl ether, bisphenol A di-β-methylglycidyl ether, bisphenol F diglycidyl ether, bisphenol S diglycidyl ether, tetrahydroxyphenylmethane tetraglycidyl ether, resorcinol diglycidyl ether, brominated bisphenol A diglycidyl ether, novolac glycidyl ether, sorbitol glycidyl ether, polyalkyleneglycol diglycidyl ether, hydrogenated bisphenol A diglycidyl ether, a diglycidyl ether of bisphenol A alkyleneoxide additive, epoxyurethane resin, glycerol triglycidyl ether, trimethylolpropane triglycidyl ether, pentaerythritol tetraglycidyl ether, phthalic acid diglycidyl ester, tetrahydrophthalic acid diglycidyl ester, hexahydrophthalic acid diglycidyl ester, acrylic acid diglycidyl ester, dimer acid diglycidyl ester, diglycidyl-p-oxybenzoate ester, diglycidylpropylene urea, tetraglycidyldiaminodiphenylmethane, triglycidyl isocyanate, epoxy polybutadiene, epoxy soybean oil, etc.

These polyepoxy compounds may be used alone or used in combinations of two or more types as well.

Then, among these polyepoxy compounds, from the viewpoint of the balance of the vibration deadening performance and bonding strength, bisphenol A diglycidyl ether, bisphenol F diglycidyl ether, and the novolac glycidyl ether compounds are particularly preferred.

### <Polyisocyanate Compounds>

Here, the polyisocyanate compound used in the present invention is not particularly limited. For example, aliphatic, alicyclic, or aromatic bifunctional or higher polyisocyanate compounds can be preferably used.

Further, among these polyisocyanate compounds, from the viewpoints of volatility, bondability, and durability, trifunctional or higher polyisocyanate compounds are particularly preferred.

Further, as concrete examples of the polyisocyanate compounds used in the present invention, there can be mentioned diisocyanate compounds such as 2,4-tolylene diisocyanate, 2,6-tolylene diisocyanate (TDI), 4,4'-diphenylmethane diisocyanate (MDI), hexamethylene diisocyanate (HDI), isophorone diisocyanate (IPDI), phenylene diisocyanate, naphthalene diisocyanate, xylene diisocyanate, hydrogenated diphenylmethane diisocyanate, and hydrogenated xylene diisocyanate; and terminal end isocyanate group-containing compounds obtained by reacting a trimer of these isocyanate compounds and an excessive amount of these isocyanate compounds with a low molecular active hydrogen compound such as ethylene glycol, propylene glycol, trimethylolpropane, glycerol, sorbitol, ethylene diamine, monoethanol amine, diethanol amine, triethanol amine, or a high molecular active hydrogen compound such as various types of polyester polyols, polyether polyols, and polyamides.

These polyisocyanate compounds can be used alone or may be used in combinations of two or more types.

Here, the polyisocyanate compound used in the present invention may be a blocked isocyanate compound as well. Among these polyisocyanate compounds, from the viewpoint of the vibration deadening performance, a trimer of TDI or HDI or a reaction product of TDI or HDI with trimethylol propane is particularly preferred.

### <Acid Anhydrides>

Into the viscoelastic resin composition of the present invention, an acid anhydride is incorporated together with the polyepoxy compound.

In this case, the polyepoxy compound reacts with the acid terminal of the polyester or the acid anhydride or the OH terminal of the polyester reacts with the acid anhydride to become an acid terminal. This acidic terminal reacts with the epoxy compound, whereby the cross-linking reaction is advanced. Therefore, it can be said that the acid anhydride has the effect of promoting the cross-linking reaction of the viscoelastic resin composition of the present invention.

Here, the acid anhydride used in the present invention is not particularly limited, but for example, among aliphatic acid anhydrides, alicyclic acid anhydrides, and aromatic acid anhydrides, ones having one or more acid anhydride groups in the molecule can be mentioned.

Further, among these acid anhydrides, from the viewpoint of the curability, ones having two or more acid anhydride groups in the molecule are particularly preferred.

As concrete examples of the acid anhydrides used in the present invention, there can be mentioned phthalic acid anhydride, tetrahydrophthalic acid anhydride, hexahydrophthalic acid anhydride, methylnacic acid anhydride, chlorendic acid anhydride, trimellitic acid anhydride, pyromellitic acid anhydride, benzophenone tetracarbonate anhydride, dodecenyl anhydride succinic acid, maleic polybutene, polyadipic acid anhydride, and polyazelic acid anhydride.

When the epoxy compound and the acid anhydride are incorporated as the curing agent used in the present invention into the amorphous copolymerizable polyester resin used in the present invention and then thermoset to form the cross-linking, the terminal function group of the amorphous copolymerizable polyester resin has a higher reactivity with a carboxyl group than a hydroxyl group, therefore the bondability of the viscoelastic resin composition of the present invention is further improved, and as a result, it is considered that the durability of the composite type vibration deadening material of the present invention is further enhanced.

### <Blended Amount of Curing Agents>

The blended amount of the curing agent in the viscoelastic resin composition of the present invention differs according to the type and blended amount of the amorphous copolymerizable polyester resin to be incorporated and the characteristic required for the composite type vibration deadening material of the present invention, but preferably is 3 parts by mass or more, particularly preferably 5 parts by mass or more, with respect to 100 parts by weight of the amorphous copolymerizable polyester resin.

Further, the blended amount of this curing agent is preferably 50 parts by mass or less, particularly preferably 35 parts by mass or less.

When the blended amount of this curing agent is less than 3 parts by mass, the curability of the viscoelastic resin composition is lowered, therefore also the bonding strength tends to be lowered, while when the blended amount of this curing agent exceeds 50 parts by mass, generally the solubility of the two is lowered, and both of the bonding strength and vibration deadening performance tend to be lowered.

### <Other Components>

In the viscoelastic resin composition of the present invention, other than the above-described components, for the purpose of raising the vibration deadening property of the viscoelastic resin composition, a viscosity imparting agent such as a phenolic compound, denatured rosin, gum rosin, coumarone-indene resin, and xylene resin (also referred to as a tackifier) can be appropriately selected and incorporated according to need within a range not degrading the characteristics of the viscoelastic resin composition of the present invention.

Further, the viscoelastic resin composition of the present invention may incorporate various types of fillers, plasticizers, antioxidants, UV-ray absorbers, anti-static agents, or fire retardants according to need within a range not degrading the characteristics of the viscoelastic resin composition of the present invention.

As concrete examples, for the purpose of raising the resin strength, various types of fibers such as glass fiber, polyester fiber, polyethylene fiber, and carbon fiber and various types of inorganic particles such as calcium carbonate, magnesium carbonate, mica, talc, and kaolin may be incorporated as well.

For the purpose of further raising the vibration deadening performance at a low temperature, various types of plasticizers such as diester phthalate, diester sebacate, triester trimellate, triphenyl phosphate, and paraffin chromate may be incorporated as well.

For the purpose of raising the heat resistance, antioxidants such as a phenol system and hindered amine system can be incorporated. For the purpose of raising the bondability of the other mixed inorganic substance and the resin, various types of coupling agents may be incorporated as well.

Furthermore, for the purpose of raising the coating property, various types of leveling agents may be incorporated as well. And for the purpose of imparting point contact electroresistance weldability, various types of metals such as iron, stainless steel, nickel, aluminum, and copper processed into a powder shape, flake shape, and filament shape, and a conductive filler such as carbon black, graphite, and carbon fiber may be incorporated as well.

These components are preferably appropriately selected and incorporated in accordance with the purpose.

### <Bondability, Gel Fraction, and Heat Resistance>

The viscoelastic resin composition of the present invention preferably has a T peel (peeling) strength after curing of not less than 70 N/25 mm when it is sandwiched between substrates made of metal as an intermediate layer. The gel fraction thereof preferably may become 50% or more.

When the T peel strength is less than 70 N/25 mm, the layer becomes easy to peel due to bending and bend back processing, therefore workability cannot be obtained when it is used in a composite type vibration deadening material.

Further, when the gel fraction is 50% or more, three-dimensional meshes having a high molecular chain necessary for preventing fluidity at a high temperature are formed, and the bonding strength and heat resistance are obtained, but when the gel fraction is less than 50%, there are many uncross-linked high molecular chains and the fluidity at a high temperature cannot be completely suppressed, therefore the bonding strength and the heat resistance become insufficient.

Further, when the viscoelastic resin composition of the present invention is used sandwiched as an intermediate layer between substrates made of metal, the retention rate of the T peel strength before and after heating in hot water at 85°C for 72 hours is preferably 80% or more, further preferably 85% or more.

When the retention rate is less than 80%, the possibility of a drop of the bondability when used for a long period in moist environment becomes high, so this not preferred.

In the same way, when the viscoelastic resin composition of the present invention is used sandwiched as an intermediate layer between substrates made of metal, preferably the shear bonding strength after curing is 500 N/cm² or more.

When the shear bonding strength after curing is less than 500 N/cm², peeling becomes easy due to bending and bend back processing, therefore workability cannot be obtained when used as a composite type vibration deadening material.

Further, when the viscoelastic resin composition of the present invention is used sandwiched as an intermediate layer between substrates made of metal, the retention rate of the T peel strength before and after heating at 240°C for 1 hour is preferably 80% or more, further preferably 85% or more.

When the retention rate is less than 80%, the possibility of peeling becomes high when undergoing a heat treatment process such as baked coating and vulcanization after sealing becomes high, so is not preferred.

### <Chromate-Free Bonding Undercoat>

The chromate-free bonding undercoat used in the present invention is comprised of 5 mass% to 50 mass% of silica, 5 mass% to 50 mass% of polyester resin, 1 mass% to 50 mass% of tannic acid, and 0 mass% to 5 mass% of a silane coupling agent.

### <Silica>

The silica component of the chromate-free bonding undercoat used in the present invention is effective in improvement of the bondability of the bonding undercoat with the metal sheet and improvement of the corrosion resistance.

The silica used in the present invention may be either of colloidal silica or fumed silica. The mean grain size is preferably 1 µm or less.

The content of the silica in the chromate-free bonding undercoat is preferably 5 mass% to 50 mass%. When it is less than 5 mass%, a sufficient durable bondability cannot be obtained, while when it exceeds 50 mass%, the coat becomes brittle, and the bondability when the resin-composite type vibration deadening material is processed becomes poor, so this not preferred.

As examples of colloidal silica, there can be mentioned Snowtex 20 and Snowtex N made by Nissan Chemical Industries, Ltd. As examples of fumed silica, there can be mentioned Aerosil 130, Aerosil TT600, Aerosil MOX80, etc. made by Nippon Aerosil Co., Ltd.

### <Polyester Resins>

The polyester resin component of the chromate-free bonding undercoat used in the present invention functions to improve the bondability between the binder of the silica component of the chromate bonding undercoat and the amorphous copolymerizable polyester resin of the viscoelastic resin composition.

As the polyester resin, use may be made of a conventionally known water-soluble paint use polyester resin etc. A resin other than a polyester resin can also be used as the binder of the silica, but sometimes the bondability with the viscoelastic resin composition (amorphous copolymerizable polyester resin) of the present invention becomes low, therefore a polyester resin is preferred as the resin added to the chromate-free bonding undercoat agent used in the present invention.

The content of the polyester resin in the chromate-free bonding undercoat is preferably 5 mass% to 50 mass%. When it is less than 5 mass%, the function as the binder of the silica is not exhibited and a sufficient bondability is not obtained, while when it exceeds 50 mass%, the durable bondability is rather lowered, so this is not preferred.

As the acid component of the polyester resin, as an aromatic dicarbonate, there can be mentioned terephthalic acid, phthalic acid anhydride, naphthalene dicarbonate, etc. As an acidic component other than an aromatic dicarbonate, there can be mentioned aliphatic dicarbonate and alicyclic dicarbonate. These may be used alone or used in combinations of two or more types.

As the aliphatic and alicyclic dicarbonates, there can be mentioned succinic acid, adipic acid, azelic acid, sebacic acid, dodecane diacid, 1,4-cyclohexane dicarbonate, etc.

As the diol component of the polyester resin, there can be mentioned ethylene glycol, neopentyl glycol, diethylene glycol, 1,4-butanediol, 1,6-hexanediol, an ethylene oxide or a propylene oxide adduct of bisphenol A, etc.

Further, preferably the polyester resin component of the chromate-free bonding undercoat used in the invention has a number average molecular mass of 7000 or more and a glass transition temperature of 0°C or more, whereby the strength of the chromate-free bonding undercoat becomes high.

As a method of dispersing the polyester resin in water, use may be made of an emulsifier or other surfactant. Further, it is also possible to introduce a carboxyl group into the polyester resin and neutralize it by ammonia, amine, or the like to thereby impart the water dispersion.

Further, for the purpose of improving the film-forming property, a water-soluble organic solvent such as acetone, methylethylketone, N-methyl-2-pyrrolidone, dioxane, and isopropyl alcohol may be added to the water-dispersed polyester resin within a range of about 10 mass% or less.

### <Tannic Acid>

Tannic acid makes it possible for the bonding undercoat agent to achieve a higher bondability and durability when used together with silica.

The content of the tannic acid in the chromate-free bonding undercoat used in the present invention is preferably 1 mass% to 50 mass%.

When it is less than 1 mass%, the effect of the improvement of the bondability and the improvement of the corrosion resin is small, while when it exceeds 50 mass%, the curing of the viscoelastic resin composition used in the present invention is inhibited, although the exact reason is not clear, and the bondability is rather lowered, so this not preferred.

The type of the tannic acid may be hydrolytic tannic acid or condensation type tannic acid or may be one obtained by partially decomposing them.

The tannic acid is not particularly limited to hamamelitannic acid, gull nut tannic acid, gallic tannic acid, and catechin. Commercially available products can be used.

### <Silane Coupling Agents>

The silane coupling agent may be added in an amount of 30 mass% or less as the component of the chromate-free bonding undercoat used in the present invention for the purpose of improving the bondability between the viscoelastic resin composition and the metal sheets.

When the silane coupling agent is added exceeding 30 mass% of the total chromate-free bonding undercoat components, the chromate-free bonding undercoat becomes brittle, the bonding strength is sometimes lowered, and the silane coupling agent becomes easy to coagulate and solidify when preparing the chromate-free bonding undercoat agent, so this not preferred.

As the silane coupling agent, preferably use is made of one having a functional group having reactivity with the resin. As such a silane coupling agent, there can be mentioned for example vinyl trichlorosilane, vinyltrimethoxysilane, vinyltriethoxysilane, vinyltris (β methoxylethoxy)silane, β-(3,4-epoxycyclohexyl) ethyltrimethoxysilane, γ-glycidoxypropyltrimethoxysilane, γ-glycidoxypropyltriethoxysilane, γ-methacrylxypropyl-methyldimethoxysilane, γ-methacryloxypropylmethyldimethoxysilane, γ-methacryloxypropylmethyldiethoxysilane, γ-methacryloxypropyl-triethoxysilane, N-β(aminoethyl)γ-aminopropylmethyldimethoxysilane, N-β(aminoethyl)γ-aminopropyltrimethoxysilane, N-β(aminoethyl) γ-aminopropyltriethoxysilane, γ-aminopropyltrimethoxysilane, γ-aminopropyltriethoxysilane, N-phenyl-γ-aminopropyltrimethoxysilane, γ-chloropropyltrimethoxysilane, γ-mercaptopropyltrimethoxysilane, etc.

Note that the silane coupling agent used in the present invention may be a composite of two or more types for use.

### <Method of Preparation of Chromate-Free Bonding Undercoat Agent>

As the method of preparation of the chromate-free bonding undercoat agent, the components may be mixed with an appropriate amount of water so that the mass ratio of solid components in the coat after drying become 5 mass% to 50 mass% of silica, 5 mass% to 50 mass% of polyester resin, 1 mass% to 50 mass% of tannic acid, and 0 mass% to 30 mass% of silane coupling agent and are dissolved or dispersed by a propeller type agitator.

The pH of the chromate-free bonding undercoat agent used in the present invention is preferably within a range of 2 to 10. When the pH is less than 2, the substrate metal sheet is etched and the corrosion resistance is liable to drop, so this not preferred.

On the other hand, when the pH exceeds 10, the possibility of a drop in the waterproof bondability of the viscoelastic resin composition due to an alkali component remaining in the coat is high, so this not preferred.

The method of adjustment of the pH of the chromate-free bonding undercoat agent used in the present invention is not particularly limited, but when adjusting it to the acid side, preferably use is made of for example an organic acid such as formic acid, acetic acid, butylic acid, oxalic acid, succinic acid, lactic acid, L-ascorbic acid, tartaric acid, citric acid, DL-malic acid, malonic acid, maleic acid, and phthalic acid; a phosphoric acid such as metaphosphoric acid, pyrophosphoric acid, orthophosphoric acid, triphosphoric acid, and tetraphosphoric acid; or a fluoride such as zirconium hydrofluoric acid, titanium hydrofluoric acid, silicofluoride, and hydrofluoric acid.

When adjusting it to the alkali side, preferably use is made of an amine compound such as methylamine, ethylamine, propylamine, isopropylamine, butylamine, amylamine, dimethylamine, diethylamine, dipropylamine, diisopropylamine, trimethylamine, triethylamine, tripropylamine, and triisopropylamine and ammonia.

### <Substrate Metal Sheets>

As the material of the substrate metal sheet used for the composite type vibration deadening material of the present invention, use can be made of various materials such as steel sheet, aluminum sheet, titanium sheet, and copper sheet.

Further, the steel sheet is not particularly limited, but the present invention is preferred for a surface-treated steel sheet, for example, a phosphate treated steel sheet, zinc treated steel sheet, stainless steel sheet, and organic coated steel sheet, and the steel sheet having a resin surface.

### <Method of Forming Chromate-Free Bonding Undercoat>

As the method of forming the chromate-free bonding undercoat between the substrate metal sheets constituting the composite type vibration deadening material and the viscoelastic resin composition, preferably first the chromate-free bonding undercoat agent is coated on the substrate metal sheets having clean surfaces by a known method and then dried, then a viscoelastic resin composition is formed by a known method.

As the method of coating the chromate-free bonding undercoat agent, for example, use can be made of the roll coater method, dipping method, electrostatic spraying method, and spray coating method.

As the drying method after coating the chromate-free bonding undercoat agent, preferably the assembly is dried in a hot air drying oven, an infrared drying oven, an induction heating oven, or the like under the condition that the peak maximum temperature becomes about 80 to 150°C.

### <Method of Forming Viscoelastic Resin Composition Layer>

As the method of forming the viscoelastic resin composition on a substrate metal sheet after forming a chromate-free bonding undercoat on the metal sheet, preferably use is made of the method of coating the substrate metal sheet after formation of the chromate-free bonding undercoat with a viscoelastic resin dissolved or dispersed in an organic solvent or water by a known method such as the curtain flow method, roll coater method, spray coating method, blade coater method or the like on the bonding surface of at least one substrate metal sheet, drying off the solvent or water in a hot air drying oven, infrared drying oven, induction heating oven, or the like, and then heat press-fixing the sheet to another substrate metal sheet using a roll and a hot press at a temperature not less than the glass transition temperature of the viscoelastic resin.

When press fixing it at a temperature lower than the glass transition temperature, a sufficient bondability is not obtained, so this not preferred.

The resin-composite type vibration deadening material after the press fixing may be heat treated at a temperature of the glass transition temperature or more according to need. By adding the heat treatment after press fixing, the cross-linking of the viscoelastic resin layer is promoted, and the bonding strength is more stabilized, so this is preferred.

Further, the composite type vibration deadening material of the present invention may have a multilayer structure of the other resin composition and the viscoelastic resin composition of the present invention according to need within the range not degrading the characteristics thereof.

### [Examples]

Below, a detailed explanation will be given of the present invention by giving examples and comparative examples, but the present invention is not limited to them.

### <Substrate Metal Sheet>

The metal sheets shown below were used as the substrate metal sheets of the resin-composite type vibration deadening material. The size of all of the used substrate metal sheets was a sheet thickness of 0.5 mm, a vertical length of 300 mm, and a lateral width of 300 mm.

### Cold rolled steel sheet (CR)

Hot dip galvanized steel sheet (GI): Zinc basis weight = 45/45 (g/m²)
Stainless steel sheet (SUS): Type = SUS304-2B finished
Aluminum sheet (AL): Type = A1 100 system
Electrogalvanized steel sheet (EG): Zinc basis weight = 3/3 (g/m²)

### <Degreasing Treatment>

The substrate metal sheet was alkali degreased (Fine Cleaner 4336 made by Nihon Parkerizing Co., Ltd. was spray treated for 2 minutes under conditions of 20 g/liter and temperature of 60°C), washed by water by deionized water for 30 seconds, and then dried.

### <Coat Chromate-Free Bonding Undercoat Agent>

A water-soluble type chromate-free bonding undercoat agent shown below was coated on the bonding surface side of the degreased substrate metal sheet by a bar coater and dried under conditions where the peak maximum temperature became 100°C or more (for 1 minute in a drying oven under a 200°C atmosphere) .

### <Chromate-Free Bonding Undercoat Agent: Example 1>

Components were blended and stirred together with deionized water so that the components constituting the chromate-free bonding undercoat agent were 1 mass% of tannic acid (Tannic Acid AL made by Fuji Chemical Industry Co., Ltd.), 49 mass% of colloidal silica (Snowtex N made by Nissan Chemical Industries, Ltd.), and 50 mass% of a polyester resin (VYRONAL MD-1245 made by Toyobo Corporation) and the total solid concentration of the chemicals became 6.3 mass% to prepare a chromate-free bonding undercoat agent.

### <Chromate-Free Bonding Undercoat Agent: Example 2>

Components were blended and stirred together with deionized water so that the components constituting the chromate-free bonding undercoat agent were 50 mass% of tannic acid (Tannic Acid AL made by Fuji Chemical Industry Co., Ltd.), 45 mass% of colloidal silica (Snowtex N made by Nissan Chemical Industries, Ltd.), and 5 mass% of a polyester resin (VYRONAL MD-1245 made by Toyobo Corporation) and the total solid concentration of the chemicals became 6.3 mass% to prepare a chromate-free bonding undercoat agent.

### <Chromate-Free Bonding Undercoat Agent: Example 3>

Components were blended and stirred together with deionized water so that the components constituting the chromate-free bonding undercoat agent were 33 mass% of tannic acid (Tannic Acid AL made by Fuji Chemical Industry Co., Ltd.), 33 mass% of colloidal silica (Snowtex N made by Nissan Chemical Industries, Ltd.), and 34 mass% of a polyester resin (VYRONAL MD-1245 made by Toyobo Corporation) and the total solid concentration of the chemicals became 6.3 mass% to prepare a chromate-free bonding undercoat agent.

### <Chromate-Free Bonding Undercoat Agent: Example 4>

The silane coupling agent (γ-glycidoxypropyltriethoxysilane (solid content of 100%) made by GE Toshiba Silicones) was added to 70 parts by mass of the solution of the chromate-free bonding undercoat agent of Example 3 while stirring until a ratio of 30 parts by mass was obtained to prepare a chromate-free bonding undercoat agent.

### <Chromate-Free Bonding Undercoat Agent: Comparative Example 1>

The silane coupling agent (γ-glycidoxypropyltriethoxysilane (solid content of 100%) made by GE Toshiba Silicones) was added to 68 parts by mass of the solution of the chromate-free bonding undercoat agent of Example 3 while stirring until a ratio of 32 parts by mass was obtained to prepare a chromate-free bonding undercoat agent.

### <Chromate-Free Bonding Undercoat Agent: Comparative Example 2>

Components were blended and stirred together with deionized water so that the components constituting the chromate-free bonding undercoat agent were 52 mass% of tannic acid (Tannic Acid AL made by Fuji Chemical Industry Co., Ltd.), 24 mass% of colloidal silica (Snowtex N made by Nissan Chemical Industries, Ltd.), and 24 mass% of a polyester resin (VYRONAL MD-1245 made by Toyobo Corporation) and the total solid concentration of the chemicals became 6.3 mass% to prepare a chromate-free bonding undercoat agent.

### <Chromate-Free Bonding Undercoat Agent: Comparative Example 3>

Components were blended and stirred together with deionized water so that the components constituting the chromate-free bonding undercoat agent were 50 mass% of colloidal silica (Snowtex N made by Nissan Chemical Industries, Ltd.) and 50 mass% of a polyester resin (VYRONAL MD-1245 made by Toyobo Corporation) and the total solid concentration of the chemicals became 6.3 mass% to prepare a chromate-free bonding undercoat agent.

### <Chromate-Free Bonding Undercoat Agent: Comparative Example 4>

Components were blended and stirred together with deionized water so that the components constituting the chromate-free bonding undercoat agent were 48 mass% of tannic acid (Tannic Acid AL made by Fuji Chemical Industry Co., Ltd.), 4 mass% of colloidal silica (Snowtex N made by Nissan Chemical Industries, Ltd.), and 48 mass% of a polyester resin (VYRONAL MD-1245 made by Toyobo Corporation) and the total solid concentration of the chemicals became 6.3 mass% to prepare a chromate-free bonding undercoat agent.

### <Chromate-Free Bonding Undercoat Agent: Comparative Example 5>

Components were blended and stirred together with the deionizing water so that the components constituting the chromate-free bonding undercoat agent were 24 mass% of tannic acid (Tannic Acid AL made by Fuji Chemical Industry Co., Ltd.), 52 mass% of colloidal silica (Snowtex N made by Nissan Chemical Industries, Ltd.), and 24 mass% of polyester resin (VYRONAL MD-1245 made by Toyobo Corporation) and the total solid concentration of the chemicals became 6.3 mass% to prepare a chromate-free bonding undercoat agent.

### <Chromate-Free Bonding Undercoat Agent: Comparative Example 6>

Components were blended and stirred together with deionized water so that the components constituting the chromate-free bonding undercoat agent were 48 mass% of tannic acid (Tannic Acid AL made by Fuji Chemical Industry Co., Ltd.), 48 mass% of colloidal silica (Snowtex N made by Nissan Chemical Industries, Ltd.), and 4 mass% of polyester resin (VYRONAL MD-1245 made by Toyobo Corporation) and the total solid concentration of the chemicals became 6.3 mass% to prepare a chromate-free bonding undercoat agent.

### <Chromate-Free Bonding Undercoat Agent: Comparative Example 7>

Components were blended and stirred together with the deionized water so that the components constituting the chromate-free bonding undercoat agent were 24 mass% of tannic acid (Tannic Acid AL made by Fuji Chemical Industry Co., Ltd.), 24 mass% of colloidal silica (Snowtex N made by Nissan Chemical Industries, Ltd.), and 52 mass% of a polyester resin (VYRONAL MD-1245 made by Toyobo Corporation) and the total solid concentration of the chemicals became 6.3 mass% to prepare a chromate-free bonding undercoat agent.

### <Method of Measurement of Amount of Deposition of Chromate-Free Bonding Undercoat Agent>

The measurement of the amount of deposition of the chromate-free bonding undercoat agent onto the substrate metal sheet comprised measuring the amount of deposited Si of the substrate metal sheet after coating and drying the chromate-free bonding undercoat agent by a fluorescent X-ray measurement device (Fluorescent X-Ray Device RIX2000 made by Rigaku), calculating back from the rate of addition of the silica (SiO₂) and silane coupling agent in the chromate-free bonding undercoat agent and the computed specific gravity of the solution, and using the value found as the amount of deposition.

The components of the chromate-free bonding undercoat agent described above are shown in Table 1.

**Table 1**

| Components | | Chromate-free bonding undercoat agent | | | | | | | | | | |
|---|---|---|---|---|---|---|---|---|---|---|---|---|
| | | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 | Comp. Ex. 6 | Comp. Ex. 7 |
| C o m p. | Tannic acid | 1 | 50 | 33 | 23.1 | 22.44 | 52 | 0 | 48 | 24 | 48 | 24 |
| | Silica | 49 | 45 | 33 | 23.1 | 22.44 | 24 | 50 | 4 | 52 | 48 | 24 |
| | Polyester resin | 50 | 5 | 34 | 23.8 | 23.12 | 24 | 50 | 48 | 24 | 4 | 52 |
| | Silane coupling agent | 0 | 0 | 0 | 30 | 32 | 0 | 0 | 0 | 0 | 0 | 0 |
| | Concentration | 6.3 | 6.3 | 6.3 | 6.3 | 6.3 | 6.3 | 6.3 | 6.3 | 6.3 | 6.3 | 6.3 |

| | | | | | | | | | | | | |
|---|---|---|---|---|---|---|---|---|---|---|---|---|
| Tannic acid: Tannic acid AL made by Fuji Chemical Industry Co., Ltd. Silica: Snowtex N made by Nissan Chemical Industries, Ltd. Polyester resin: VYRONAL MD-1245 made by Toyobo Corporation Silane coupling agent:γ-glycidoxypropyltriethoxysilane made by GE Toshiba Silicones | | | | | | | | | | | | |

### <Coat Viscoelastic Resin Composition>

A viscoelastic resin composition shown below was coated on the bonding surfaces of the substrate sheets on which the chromate-free bonding undercoat agent was coated and dried by using a bar coater so that the resin layer thickness after coating and drying became about 50 µm.

Next, two substrate metal sheets after coating by the resin were simultaneously placed in a hot air drying oven in a 220°C atmosphere, dried for 2 minutes, then taken out and the resin coating surfaces were adhered to each other and immediately press fixed by a hard rubber roll (linear pressure = 130 N/cm).

### <Viscoelastic Resin Composition: Example 1>

The amorphous copolymerizable polyester resin of the principal component of the viscoelastic resin composition is a copolymerizable polyester resin containing an acid component comprised of 53 mol% of isophthalic acid, 45 mol% of sebacic acid, and 2 mol% of trimellitic acid anhydride, containing a diol component comprised of 60 mol% of 2-methyl-1,3-propane diol and 40 mol% of 3,3'-dimethylolheptane, and having a molecular weight after polycondensation of 25000 and a glass transition temperature of -23°C.

Into 100 parts by mass of the amorphous copolymerizable polyester resin, 4 parts by mass of benzophenone tetracarbonate anhydride (BTDA) and 13 parts by mass of epibis epoxy resin (Epotot YD8125 made by Toto Kasei) were dissolved and blended as the curing component together with cyclohexanone/Sorbesso 100 (aromatic hydrocarbon-based solvent made by Exxon Mobil Corporation) = 1/1 solution (solid concentration: 40%).

Before use, 0.3 part by mass of triphenyl phosphine (TPP) was blended while stirring as the curing accelerator to prepare the viscoelastic resin composition.

### <Viscoelastic Resin Composition: Example 2>

The amorphous copolymerizable polyester resin of the principal component of the viscoelastic resin composition is a copolymerizable polyester resin containing an acid component comprised of 82 mol% of isophthalic acid, 16 mol% of dimer acid, and 2 mol% of trimellitic acid, containing a diol component comprised of 40 mol% of neopentyl glycol and 60 mol% of 2-methyl-1,3-propanediol, and having a molecular weight after polycondensation of 25000 and a glass transition temperature of -4°C.

Into 100 parts by mass of the amorphous copolymerizable polyester resin, 4 parts by mass of benzophenone tetracarbonate anhydride (BTDA), and 13 parts by mass of epibis epoxy resin (Epotot YD8125 made by Toto Kasei) were dissolved and blended as the curing component together with cyclohexanone/Sorbesso 100 (aromatic hydrocarbon-based solvent made by Exxon Mobil Corporation) = 1/1 solution (solid content concentration: 40%) .

Before use, 0.3 part by mass of triphenyl phosphine (TPP) was blended while stirring as the curing accelerator to prepare a viscoelastic resin composition.

### <Viscoelastic Resin Composition: Example 3>

The amorphous copolymerizable polyester resin of the principal component of the viscoelastic resin composition is a copolymerizable polyester resin containing an acid component comprised of 29 mol% of terephthalic acid, 29 mol% of isophthalic acid, 40 mol% of adipic acid, and 2 mol% of trimellitic acid, containing a diol component comprised of 45 mol% of neopentyl glycol and 55 mol% of ethylene glycol, and having a molecular weight after polycondensation of 22000 and a glass transition temperature of 4°C.

Into 100 parts by mass of the amorphous copolymerizable polyester resin, 4 parts by mass of benzophenone tetracarbonate anhydride (BTDA) and 13 parts by mass of epibis epoxy resin (Epotot YD8125 made by Toto Kasei) were dissolved and blended as the curing component together with cyclohexanone/Sorbesso 100 (aromatic hydrocarbon-based solvent made of Exxon Mobil Corporation) = 1/1 solution (solid content concentration: 40%). Before use, 0.3 part by mass of triphenyl phosphine (TPP) was blended while stirring as the curing accelerator to prepare a viscoelastic resin composition.

### <Viscoelastic Resin Composition: Example 4>

Viscoelastic resin compositions of Example 1 and Example 3 were blended in a 1:1 ratio and 0.3 part by mass of triphenyl phosphine (TPP) was blended as the curing accelerator while stirring before use to prepare the viscoelastic resin composition.

### <Viscoelastic Resin Composition: Example 5>

The amorphous copolymerizable polyester resin of the main component of the viscoelastic resin composition was the same copolymerizable polyester resin as the viscoelastic resin composition of Example 1 (an acid component comprised of 53 mol% of isophthalic acid, 45 mol% of sebacic acid, and 2 mol% of trimellitic acid anhydride, a diol component comprised of 60 mol% of 2-methyl-1,3-propane diol and 40 mol% of 3,3'-dimethylolheptane, a molecular weight after polycondensation of 25000, and a glass transition temperature of -23°C). This was dissolved in a cyclohexanone/Sorbesso 100 (aromatic hydrocarbon-based solvent made by Exxon Mobil Corporation) = 1/1 solution (solid concentration: 40%).

Before use, 5 parts by mass of Coronate HX (made by Nippon Polyurethane Industry Co., Ltd.) was blended with this viscoelastic resin composition solution while stirring as the curing agent to prepare a viscoelastic resin composition.

### <Viscoelastic Resin Composition: Comparative

### Examples 1 to 3>

In Example 1 through Example 3 of the viscoelastic resin composition described above, the benzophenone tetracarbonate anhydride (BTDA) as the curing component, the epibis epoxy resin, and the triphenylphosphine (TPP) as the curing accelerator were not blended, but the amorphous copolymerizable polyester resin was used as is as the thermosetting resin.

### <Viscoelastic Resin Composition: Comparative Example 4>

100 parts by mass of acryl rubber (Nipol AR-51 made by Zeon Corporation) was pressed into a film having a thickness of 50 µm by a hot press at 200°C. This was sandwiched between undercoat treated steel sheets each having a thickness of 0.5 mm and press fixed by a hot press at 200°C for 60 seconds to thereby obtain a composite type vibration deadening material.

### <Viscoelastic Resin Composition: Comparative Example 5>

100 parts by mass of a hydrogen added styrene-based plastic elastomer (Hybrar made by Kuraray Co., Ltd.) was pressed into a film having a thickness of 50 µm by a hot press at 200°C. This was sandwiched between undercoat treated steel sheets each having a thickness of 0.5 mm and press fixed by a hot press at 200°C for 60 seconds to thereby obtain a composite type vibration deadening material.

### <Viscoelastic Resin Composition: Comparative Example 6>

100 parts by mass of an acrylic elastomer (Vamac HVG made by Mitsui DuPont Polychemical) was pressed into a film having a thickness of 50 µm by a hot press at 200°C. This was sandwiched between undercoat treated steel sheets each having a thickness of 0.5 mm and press fixed by a hot press at 200°C for 60 seconds to thereby obtain a composite type vibration deadening material.

### <Method of Analysis of Amorphous Copolymerizable Polyester>

The characteristics of the amorphous copolymerizable polyester described above were analyzed based on the following analysis methods.

### (1) Analysis of weight average molecular weight of amorphous copolymerizable polyester resin

The weight average molecular mass of the amorphous copolymerizable polyester resin was computed from the results of GPC measurement by using gel permeation chromatography (GPC) 150c using tetrahydrofuran as an eluant at a column temperature of 35°C and a flow rate of 1 ml/min to obtain a measurement value in polystyrene conversion.

### (2) Analysis of glass transition temperature of amorphous copolymerizable polyester resin

The glass transition temperature of the amorphous copolymerizable polyester resin was found by measurement using a differential scan calorimeter (DSC) DSC-220 made by Seiko Instruments Inc. at a temperature elevation rate of 20°C/min.

The components of the examples and comparative examples of the polyester-based viscoelastic resin composition and characteristic analysis values thereof are shown in Table 2, and comparative examples of the viscoelastic resin composition other than the polyester system are shown in Table 3.

**Table 2**

| Component | | | Polyester-based viscoelastic resin composition (following blended amounts indicate parts by mass) | | | | | | | |
|---|---|---|---|---|---|---|---|---|---|---|
| | | | Ex. 1 | Ex. 2 | Ex. 3 | Ex. 4 | Ex. 5 | Comp. Ex. 1 | Comp Ex. 2 | Comp. Ex. 3 |
| Composition | Polyester resin | | 100 | 100 | 100 | 100 | 100 | 100 | 100 | 100 |
| | Curing agent | Type | YD8125 /BTDA | YD8125 /BTDA | YD8125 /BTDA | YD8125 /BTDA | HX | None | None | None |
| | | Blended amount | 13/4 | 13/4 | 13/4 | 13/4 | 5 | 0 | 0 | 0 |
| | Curing accelerator (TPP) | | 0.3 | 0.3 | 0.3 | 0.3 | 0 | 0 | 0 | 0 |
| Characteristics | Molecular weight | | 25000 | 22000 | 22000 | - | 25000 | 25000 | 22000 | 22000 |
| | Glass transition temperature | | -23°C | -4°C | 4°C | -10°C | -23°C | -23°C | -4°C | -4°C |

| | | | | | | | | | | |
|---|---|---|---|---|---|---|---|---|---|---|
| YD8125: Epibis type epoxy resin Epotot YD8125 made by Toto Kasei BTDA: Benzophenone tetracarbonate dianhydride HX: Aliphatic polyisocyanate Coronate HX made by Nippon Polyurethane Industry Co., Ltd. | | | | | | | | | | |

**Table 3**

| | Viscoelastic resin composition | | |
|---|---|---|---|
| | Comp. Ex. 4 | Comp. Ex. 5 | Comp. Ex. 6 |
| Resin type | Acrylic rubber | Hydrogen-added styrene-based thermoplastic elastomer | Acrylic elastomer |
| | Zeon Corporation Nipol AR-51 | Kuraray Co., Ltd. Hybrar | Mitsui DuPont Polychemical Vamac HVG |

### <Examples and Comparative Examples>

Tables 4 and 5 show combinations of the materials of the resin-composite vibration deadening materials prepared using the above substrate metal sheet, chromate-free bonding undercoat agent, and viscoelastic resin composition and the evaluation results.

For reference, the evaluation results of the resin-composite type vibration deadening material using the conventional chromate bonding undercoat agent (Zinchrom ZM1300AS made by Nihon Parkerizing Co., Ltd.) and Example 1 of a viscoelastic resin composition were described in Table 5.

**Table 4**

| Ex./Comp. Ex. | Combination of resin-composite type vibration deadening material | | | Evaluation results | | | | |
|---|---|---|---|---|---|---|---|---|
| | Substrate metal sheet | Chromate-free bonding elastic undercoat agent See Table 1 (coating: mg/m²) | Visco-resin composition See Tables 2 and 3 | Resin gel ratio (%) mm) | Initial T peel strength (N/25 mm) | Initial shearing strength | T peel strength after hot water treatment (N/25 mm) | Durable bondability evaluation |
| Ex. 1 | CR | Ex. 1, (250) | Ex. 1 | 80 | 110 | 1100 | 85 | ○ |
| Ex. 2 | CR | Ex. 2, (250) | Ex. 1 | 80 | 100 | 1000 | 80 | ○ |
| Ex. 3 | CR | Ex. 3, (250) | Ex. 1 | 80 | 105 | 1050 | 80 | ○ |
| Ex. 4 | CR | Ex. 4, (250) | Ex. 1 | 80 | 120 | 1150 | 95 | ○ |
| Ex. 5 | SUS | Ex. 1, (250) | Ex. 1 | 80 | 107 | 1070 | 78 | ○ |
| Ex. 6 | sus | Ex. 2, (250) | Ex. 1 | 80 | 98 | 980 | 72 | ○ |
| Ex. 7 | SUS | Ex. 3, (250) | Ex. 1 | 80 | 105 | 1050 | 80 | ○ |
| Ex. 8 | SUS | Ex. 4, (250) | Ex. 1 | 80 | 120 | 1200 | 95 | ○ |
| Ex. 9 | CR | Ex. 3, (250) | Ex. 2 | 60 | 115 | 1100 | 85 | ○ |
| Ex. 10 | CR | Ex. 3, (250) | Ex. 3 | 85 | 135 | 1300 | 110 | ○ |
| Ex. 11 | CR | Ex. 3, (250) | Ex. 4 | 79 | 100 | 1000 | 80 | ○ |
| Ex. 12 | CR | Ex. 3, (250) | Ex. 5 | 53 | 85 | 850 | 70 | ○ |
| Ex. 13 | sus | Ex. 3, (250) | Ex. 2 | 80 | 113 | 1130 | 90 | ○ |
| Ex. 14 | SUS | Ex. 3, (250) | Ex. 3 | 83 | 145 | 1450 | 115 | ○ |
| Ex. 15 | SUS | Ex. 3, (250) | Ex. 4 | 78 | 100 | 1000 | 78 | ○ |
| Ex. 16 | SUS | Ex. 3, (250) | Ex. 5 | 50 | 83 | 830 | 70 | ○ |
| Ex. 17 | GI | Ex. 3, (250) | Ex. 3 | 83 | 150 | 1500 | 120 | ○ |
| Ex. 18 | AL | Ex. 3, (250) | Ex. 3 | 80 | 140 | 1400 | 110 | ○ |
| Ex. 19 | EG | Ex. 3, (250) | Ex. 3 | 83 | 150 | 1500 | 115 | ○ |
| Ex. 20 | sus | Ex. 3, (3) | Ex. 3 | 84 | 130 | 1400 | 95 | ○ |
| Ex. 21 | SUS | Ex. 3, (900) | Ex. 3 | 80 | 120 | 1250 | 90 | ○ |

| | | | | | | | | |
|---|---|---|---|---|---|---|---|---|
| (Durable bondability evaluation criteria) | | | | | | | | |

The initial T peel strength and T peel strength after hot water treatment were compared and evaluated by the bonding strength retention rate
○: Bonding strength retention rate of 70% or more
Δ: Bonding strength retention rate of 30% to less than 70%
×: Bonding strength retention rate of less than 30%

**Table 5 (Continued Table 4)**

| Ex. /Comp. Ex. | Combination of resin-composite type vibration deadening material | | | Evaluation results | | | | |
|---|---|---|---|---|---|---|---|---|
| | Substrate metal sheet | Chromate-free bonding undercoat agent See Table 1 (coating: mg/m²) | Viscoelastic resin composition See Tables 2 and 3 | Resin gel ratio (%) | Initial T peel strength bonding (N/25 mm) | Initial shearing strength | T peel strength after hot water treatment (N/25 nm) | Durable bondability evaluation |
| Comp. Ex. 1 | CR | Comp. Ex. 1 (250) | Ex. 1 | 80 | 70 | 650 | 50 | Δ |
| Comp. Ex. 2 | CR | Comp. Ex. 2 (250) | Ex. 1 | 70 | 72 | 650 | 50 | Δ |
| Comp. Ex. 3 | CR | Comp. Ex. 3, (250) | Ex. 1 | 80 | 115 | 1100 | 75 | Δ |
| Comp. 4 | CR | Comp. Ex. 4, (250) | Ex. 1 | 80 | 70 | 800 | 50 | ○ |
| Comp. Ex. 5 | CR | Comp. Ex. 5, (250) | Ex. 1 | 80 | 80 | 850 | 50 | Δ |
| Comp. Ex. 6 | CR | Comp. Ex. 6, (250) | Ex. 1 | 80 | 65 | 700 | 42 | ○ |
| Comp. Ex. 7 | CR | Comp. Ex. 7, (250) | Ex. 1 | 80 | 115 | 1100 | 70 | Δ |
| Comp. Ex. 8 | SUS | Comp. Ex. 1, (250) | Ex. 1 | 80 | 70 | 650 | 47 | Δ |
| Comp. Ex. 9 | sus | Comp. Ex. 2, (250) | Ex. 1 | 68 | 70 | 660 | 40 | Δ |
| Comp. Ex. 10 | SUS | Comp. Ex. 3, (250) | Ex. 1 | 80 | 110 | 1020 | 70 | Δ |
| Comp. Ex. 11 | SUS | Comp. Ex. 4, (250) | Ex. 1 | 80 | 70 | 780 | 50 | ○ |
| Comp. Ex. 12 | SUS | Comp. Ex. 5, (250) | Ex. 1 | 80 | 75 | 830 | 50 | Δ |
| Comp. Ex. 13 | SUS | Comp. Ex. 6, (250) | Ex. 1 | 80 | 60 | 650 | 40 | Δ |
| Comp. Ex. 14 | SUS | Comp. Ex. 7, (250) | Ex. 1 | 80 | 110 | 1050 | 68 | Δ |
| Comp. Ex. 15 | CR | Ex. 3, (250) | Comp. Ex. 1 | 0 | 25 | 300 | 0 | × |
| Comp. Ex. 16 | CR | Ex. 3, (250) | Comp. Ex. 2 | 0 | 35 | 400 | 10 | × |
| Comp. Ex. 17 | CR | Ex. 3, (250) | Comp. Ex. 3 | 0 | 70 | 550 | 20 | × |
| Comp. Ex. 18 | CR | Ex. 3, (250) | Comp. Ex. 4 | 0 | 70 | 450 | 20 | × |
| Comp. Ex. 19 | SUS | Ex. 3, (250) | Comp. Ex. 1 | 0 | 20 | 300 | 0 | × |
| Comp. Ex. 20 | SUS | Ex. 3, (250) | Comp. Ex. 2 | 0 | 30 | 300 | 10 | Δ |
| Comp. Ex. 21 | SUS | Ex. 3, (250) | Comp. Ex. 3 | 0 | 56 | 530 | 20 | Δ |
| Comp. Ex. 22 | SUS | Ex. 3, (250) | Comp. Ex. 4 | 0 | 65 | 420 | 15 | × |
| Comp. Ex. 23 | sus | Ex. 3, (2) | Ex. 1 | 83 | 120 | 1100 | 80 | Δ |
| Comp. Ex. 24 | sus | Ex. 3, (905) | Ex. 1 | 76 | 110 | 050 | 70 | Δ |
| Comp. Ex. 25 | SUS | Ex. 3, (250) | Comp. Ex. 5 | 0 | 80 | 500 | 30 | Δ |
| Comp. Ex. 26 | SUS | Ex. 3, (250) | Comp. Ex. 6 | 0 | 90 | 700 | 50 | Δ |
| Ref. Ex. 1 | CR | Chromate agent, (210) | Ex. 1 | 80 | 120 | 1100 | 110 | ○ |
| Ref. Ex. 2 | SUS | Chromate agent, (210) | Ex. 1 | 80 | 110 | 1100 | 100 | ○ |

### (Durable bondability evaluation criteria)

The initial T peel strength and T peel strength after hot water treatment were compared and evaluated by the bonding strength retention rate
○: Bonding strength retention rate of 70% or more
Δ: Bonding strength retention rate of 30% to less than 70%
×: Bonding strength retention rate of less than 30%

### <Method of Analysis and Method of Evaluation>

The analysis of the characteristics and evaluation of the performance of the viscoelastic resin compositions and composite type vibration deadening materials obtained in the above examples and comparative examples were carried out based on the following method of analysis and method of evaluation.

### (1) Evaluation of gel fraction of viscoelastic resin composition

A vibration deadening metal sheet having a coated sheet thickness of 0.5 mm and a resin layer thickness of 50 µm was prepared, the vibration deadening sheet was peeled apart, then a part with film remaining on one side was cut into a 25 x 50 mm piece which was dipped in a solution of methylethylketone (MEK) for 3 minutes, then dried. The weight ratio of the resin was found by measuring the weight of the sample before and after dipping in MEK.

### (2) Evaluation of bonding strength (initial T peel strength) of viscoelastic resin composition

A sample having a width of 25 mm and a length of 150 mm was cut from a vibration deadening metal sheet having a coated sheet thickness of 0.5 mm and a resin layer thickness of 50 µm. The T peel (peeling) strength when pulling the front and back steel sheets of the end parts of the sample a 180° direction was measured by using a tensile tester (tension compression tester STA-1150 made by Orientec) at a tensile rate of 50 mm/min and at a measurement temperature of 23°C.

### (3) Evaluation of bonding strength (initial shear bonding strength) of viscoelastic resin composition

A sample having a width of 25 mm and a length of 200 mm was cut from a vibration deadening metal sheet having a coated sheet thickness of 0.5 mm and a resin layer thickness of 50 µm At the center of the sample, a superimposed portion of the front and back coated metal sheet layers having a length of 12.5 mm and a width of 25 mm for measuring the shear bonding strength was formed by using a microcutter or the like to cut a groove in the width direction of the front coated metal sheet layer of the vibration deadening metal sheet and to similarly cut a groove in the back coated metal sheet layer at a position 12.5 mm away from the groove of the front coating so as to thereby prepare a shear bonding strength measurement sample.

A length between grooves cut in the front and back coated metal sheet layers of the prepared shear bonding strength measurement use sample and the width of the sample were measured by calipers, and an area of the superimposed portion of the front and back coated metal sheet layers is found.

The two end portions of the sample for measuring the shear bonding strength is fixed to a sample holder of the tensile tester (Autograph AG-10KNE made by Shimadzu Scientific Instruments Co., Ltd.), then the tension load is measured at a tensile rate of 50 mm/min and at a measurement temperature of 23°C. The measured tension maximum load was divided by the area of the superimposed portion of the front and back coated metal sheet layers to find the bonding strength per unit area. This was used as the shear bonding strength.

### (4) Evaluation of durable bondability (T peel strength after hot water treatment) of composite type vibration deadening material

A sample having a width of 25 mm and a length of 150 mm was cut from a vibration deadening metal sheet having a coated sheet thickness of 0.5 mm and a resin layer thickness of 50 µm. The sample for measuring bondability was dipped in hot water of 85°C for 72 hours, then the bonding strength was measured by the same method as that for the initial T peel (peeling) strength.

### (5) Evaluation of durable bondability

The initial T peel strength and the T peel strength after the hot water treatment were compared. The durable bondability was evaluated from the T peel strength retention rate.

While the invention has been described with reference to specific embodiments chosen for purpose of illustration, it should be apparent that numerous modifications could be made thereto by those skilled in the art without departing from the basic concept and scope of the invention.

### [Industrial Applicability]

As mentioned above, the resin-composite type vibration deadening material of the present invention is more excellent than the conventional resin-composite type vibration deadening material in view of the environmental load. In addition, the shaping property of the present invention is excellent.

Further, the result is equivalent to a conventional resin-composite type vibration deadening material in the durable bondability as well, so is extremely useful as a vibration and noise reduction material having a smell environmental load.

Accordingly, the present invention has greatly an industrial applicability

## Claims

1. A chromate-free resin-composite type vibration deadening material excellent in durable bondability having a multilayer structure comprised of a viscoelastic resin composition sandwiched between metal sheets as an intermediate layer, **characterized by** that:
(i) the viscoelastic resin composition is a thermosetting resin comprised of an amorphous copolymerizable polyester resin having a weight average molecular weight from 5000 or more to 5000 or less and a curing agent and
(ii) the surfaces of the metal sheets on the sides contacting the viscoelastic resin layer are provided with chromate-free bonding undercoats comprising 5 mass% to 50 mass% of silica, 5 mass% to 50 mass% of a polyester resin, 1 mass% to 50 mass% of tannic acid, and 0 mass% to 30 mass% of a silane coupling agent.

2. A chromate-free resin-composite type vibration deadening material excellent in durable bondability as set forth in claim 1, wherein the curing agent is comprised of at least one type of curing agent selected from the group consisting of a polyepoxy compound, polyisocyanate compound,'and acid anhydride.

3. A chromate-free resin-composite type vibration deadening material excellent in durable bondability as set forth in claim 1 or 2, wherein the amount of deposition of the chromate-free bonding undercoat on the metal sheet surface is 3 to 900 mg/m².

4. A chromate-free resin-composite type vibration deadening material excellent in durable bondability as set forth in any one of claims 1 to 3, wherein the metal sheet is a steel sheet, plated steel sheet, stainless steel sheet, aluminum sheet, or titanium sheet.

## Patentansprüche

1. Ein chromatfreies, vibrationsdämpfendes Material vom Harzkomposittyp mit hervorragendem dauerhaften Bindungsvermögen, das eine Mehrschichtstruktur aufweist, umfassend eine viskoelastische Harzzusammensetzung, die zwischen Metallblechen als eine Zwischenschicht angeordnet ist, **dadurch gekennzeichnet, dass**:
(i) die viskoelastische Harzzusammensetzung ein duroplastisches Harz, umfassend ein amorphes, copolymerisierbares Polyesterharz mit einem Gewichtsmittel des Molekulargewichts von 5000 oder mehr bis 50000 oder weniger und einen Härter, ist und
(ii) die Oberflächen der Metallbleche auf den Seiten, die mit der viskoelastischen Harzschicht in Kontakt sind, mit chromatfreien Bindungsgrundierungen, umfassend 5 Massen% bis 50 Massen% Siliciumdioxid, 5 Massen% bis 50 Massen% eines Polyesterharzes, 1 Massen% bis 50 Massen% Tanninsäure und 0 Massen% bis 30 Massen% eines Silankupplungsmittels, versehen sind.

2. Ein chromatfreies, vibrationsdämpfendes Material vom Harzkomposittyp mit hervorragendem dauerhaften Bindungsvermögen wie in Anspruch 1 beschrieben, wobei der Härter mindestens eine Art Härter umfasst, ausgewählt aus der Gruppe bestehend aus einer Polyepoxyverbindung, Polyisocyanatverbindung und Säureanhydrid.

3. Ein chromatfreies, vibrationsdämpfendes Material vom Harzkomposittyp mit hervorragendem dauerhaften Bindungsvermögen wie in Anspruch 1 oder 2 beschrieben, wobei die aufgetragene Menge der chromatfreien Bindungsgrundierung auf der Oberfläche des Metallblechs 3 bis 900 mg/m² beträgt.

4. Ein chromatfreies, vibrationsdämpfendes Material vom Harzkomposittyp mit hervorragendem dauerhaften Bindungsvermögen wie in einem der Ansprüche 1 bis 3 beschrieben, wobei das Metallblech ein Stahlblech, plattiertes Stahlblech, Edelstahlblech, Aluminiumblech oder Titanblech ist.

## Revendications

1. Matériau amortisseur de vibrations du type composite de résine exempt de chromate, offrant une adhérence durable excellente, possédant une structure multicouche composée d'une composition de résine viscoélastique prise en sandwich entre des tôles métalliques en tant que couche intermédiaire, **caractérisé en ce que** :
(i) la composition de résine viscoélastique est une résine thermodurcissable composée d'une résine de polyester copolymérisable amorphe ayant un poids moléculaire moyen en poids de 5 000 à plus de 50 000 ou moins, et d'un agent de cuisson, et
(ii) les surfaces des tôles métalliques sur les côtés qui sont en contact avec la couche de résine viscoélastique sont pourvues de sous-couches de liaison exemptes de chromate comprenant 5 % en masse à 50 % de silice, 5 % en masse à 50 % en masse d'une résine de polyester, 1 % en masse à 50 % en masse d'acide tannique et 0 % en masse à 30 % en masse d'un agent de pontage du type silane.

2. Matériau amortisseur de vibrations du type composite de résine exempt de chromate, offrant une adhérence durable excellente, selon la revendication 1, dans lequel l'agent de cuisson est composé d'au moins un type d'agent de cuisson choisi dans le groupe constitué d'un composé polyépoxy, d'un composé polyisocyanate et d'un anhydride acide.

3. Matériau amortisseur de vibrations du type composite de résine exempt de chromate, offrant une adhérence durable excellente, selon la revendication 1 ou 2, dans lequel la quantité de dépôt de la sous-couche de liaison exempte de chromate sur la surface de la tôle métallique est de 3 à 900 mg/m².

4. Matériau amortisseur de vibrations du type composite de résine exempt de chromate, offrant une adhérence durable excellente, selon l'une quelconque des revendications 1 à 3, dans lequel la tôle métallique est une tôle d'acier, une tôle d'acier plaqué, une tôle d'acier inoxydable, une tôle d'aluminium ou une tôle de titane.
